## Europäisches Patentamt
## European Patent Office
## Office européen des brevets

(11) Publication number: **0 183 767**
**B1**

(12) **EUROPEAN PATENT SPECIFICATION**

(45) Date of publication of patent specification: **15.03.89**

(51) Int. Cl.⁴: **C 02 F 1/00,** B 01 D 29/12, E 03 F 5/14

(21) Application number: **85902688.2**

(22) Date of filing: **31.05.85**

(86) International application number:
**PCT/NO85/00030**

(87) International publication number:
**WO 85/05616 19.12.85 Gazette 85/27**

(54) **TUBULAR TRASH NET FOR PRE-TREATING SEWAGE.**

(73) Proprietor: **INTERPUBLIC A.S.**
**Postboks 3849 Ullevaal Hageby**
**N-0805 Oslo 8 (NO)**

(72) Inventor: **SONDOV, Sten, Y.**
**P.T. Mallingsvei 10E**
**N-0286 Oslo 2 (NO)**
Inventor: **FROM, Jan, Oddvar**
**Oscarsgt. 67A**
**N-0256 Oslo 2 (NO)**

(74) Representative: **Carpmael, John William**
**Maurice et al**
**CARPMAELS & RANSFORD 43 Bloomsbury**
**Square**
**London, WC1A 2RA (GB)**

(30) Priority: **01.06.84 NO 842200**

(43) Date of publication of application:
**11.06.86 Bulletin 86/24**

(45) Publication of the grant of the patent:
**15.03.89 Bulletin 89/11**

(84) Designated Contracting States:
**BE DE FR GB IT NL SE**

(56) References cited:
**EP-A-0 009 738**
**FR-A-2 383 130**
**US-A-3 282 430**

Courier Press, Leamington Spa, England.

## Description

In cleaning plants for sewage, the sewage will normally first flow through a raked bar-screen, which is designed to stop larger solid waste particles such as textiles, plastic, cigarette butts etc. which are carried in by the sewage. Such coarse waste can easily clog drain outlets, pumps and valves, etc.

A typical raked bar-screen consists of flat steel strips placed parallel to each other across the sewage inlet, at an angle to the inlet flow direction. The sewage is forced through the parallel bars, where openings normally vary from 15 to 25 mm. The coarse trash material is deposited around the bars and is removed at necessary intervals by a rake with teeth which fit between the bar, which is drawn up from the bottom of the bar-screen and rakes the trash up over the water-level and deposits it on a conveyor belt, whereas in larger installations the trash will be transported to a de-watering unit in order to press out most of the water content.

There are other methods for separating trash from the sewage, e.g. by diverting the sewage over a strainer unit which has openings of approximately 1 mm., so that the sewage water passes on through while the wet trash slides down the strainer due to its own weight, and is transplanted on a conveyor belt to a disposal container, in some cases being first run through a de-watering unit.

If one further wishes to remove small trash particles remaining in the sewage, traditional sediment-collecting basins must be used in addition to the bar-screen or strainer. The above-mentioned screen or strainer are normally the first stages in the cleaning process, coming before the sewage is diverted on either to a sediment-collector or to a deep-water outfall distributor pipeline (clogging can occur if the above trash removal is neglected).

The raked bar-screen has the disadvantage that coarse trash particles, threads, string, bits of stockings, etc. can pass on through the screen, since the length of the openings is considerably greater than their width. Due to the relatively small area of the openings themselves, the average speed of the sewage through the bars is high, which reduces the screen's effectiveness in separating solid trash from sewage. The most effective solution for the screen principle would be to use square openings in the screen, for example 10 × 10 mm. or 15 × 15 mm., etc., but this arrangement doesn't allow raking the trash away from the screen because of the limitations of current technology.

Screens, strainers etc. also have the great disadvantage that they must be constructed in a series of mechanical units, each with its own separate power drive: the screen with its raking arm, a convey belt transport unit, a de-watering unit, and in many cases an additional conveyor belt leading to a disposal container.

In the field of screening of irrigation water for crops, in order to remove unwanted seeds and other debris, US—A—3282430 describes the use of a sack fixed in a channel, whereby the channel guides water into the mouth of the sack. The sack sits on a reticulate table in the channel. This device has the disadvantage that the bag has a somewhat limited capacity, with the consequence that it requires regular replacing. This would be a significant drawback if such an arrangement were to be used in other fields, such as pre-treatment of sewage, in which the volumes of water handled are very large, as is the proportion of debris therein.

In specialised effluent treatment where a very high degree of water purity is required, US—A—4260496 describes a filtration process for separating solid-sludge-like and dissolved constituents from effluent, comprising the steps of introducing the effluent under an elevated pressure into a tube-shape filter. The tube-shape filter is described as being of semi-peremeable or woven material. The process described does not appear to be aimed at the bulk processing of sewage. The rate at which the woven material and/or semi-permeable membrane would be used up would make the process very expensive. Moreover, it is described how the liquid is pumped under a pressure of from about 100 to 1000 kPa (in particular from about 200 to 500 kPa). The power consumption required to pump the effluent to this pressure would be substantial.

It is an aim of the present invention to provide means for pre-treatment of sewage, which avoids problems associated with the prior art, and in particular is inexpensive in terms of labour and energy.

According to the present invention, there is provided a device for pre-treatment of sewage comprising a channel for conveying the sewage, and a net for separating unwanted trash materials from the sewage in the channel, characterised in that the net is a folded elongate tubular net contained in a cassette, and a plurality of mechanically driven rollers are provided, positioned above the channel for drawing the net out of the cassette, for raising it from a filtering position in the channel at which the net is arranged for submersion in sewage in the channel up to a draining position above the channel, and for dewatering the net and its associated trash by pressure between the rollers.

The device preferably comprises means for sensing when the net is filled to a desired degree, said means being arranged to operate the mechanically-driven rollers. The means for sensing may comprise a pressure gauge/pressostat placed near the inlet to the net.

There may also be provided a pipe in the inlet to the net, said pipe acting as a support for the cassette and serving to lead sewage into the net in a horizontal submerged position thereof, and a hinged joint in the pipe allowing the cassette to be lifted above the sewage level for replacement.

In accordance with another aspect of the invention, there is provided a method of pre-treatment of sewage, as defined in the claims.

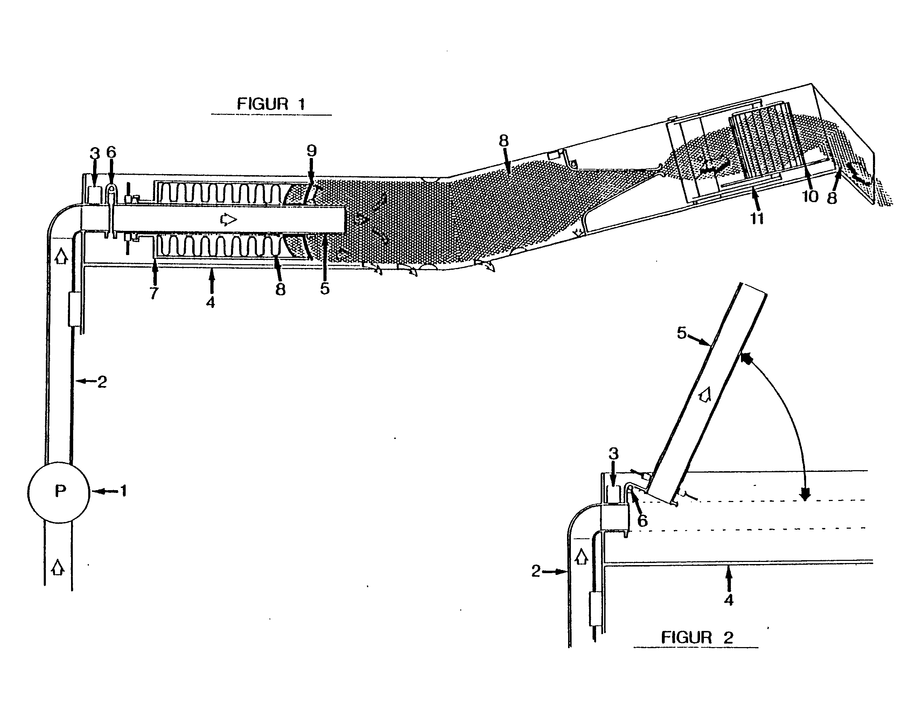

The invention described below — the tubular trash net unit for pre-treatment sewage — replaces all of the above units with a single device, and in addition can achieve a much higher efficiency in removing solid trash from sewage water. Details of operation will be explained below, with numbers which refer to the enclosed drawing (see fig. 1 and 2):

Sewage is pumped to the tubular trash net (8), as indicated in fig. 1, by the pump (1) through the inlet pipe (2), but may also be led into the net using gravity flow from above.

A pressure gauge/pressostat (3) is placed near the inlet and sends an electrical impulse to the mechanically-driven rollers (10/11) when pressure build-up in the inlet section exceeds the desired level. A drainage canal (4) leads run off water from the trash net to the next stage of processing or outflow. The sewage is passed on through extension pipe (5), which is connected to the inlet pipe (2) with a hinged joint with a water-tight gasket, which allows replacing the trash net cassette (7) when the net (8), which is colour-coded to indicate time for replacement, must be changed (see fig. 2).

This can be performed by stopping the pump (1), swinging the extension pipe (5) on its hinge (6) so that the trash net cassette (7) can come into its replacement position, the rubber friction sleeve (9) is loosened, the cassette (7) is removed and the extension pipe (5) is ready to receive a new trash net cassette. The friction sleeve (9) is then adjusted, the tubular trash net (8) is fastened to the end of the previous net which is still in position between the rollers (10), and the trash removal process is ready to proceed once again.

## Claims

1. A device for pre-treatment of sewage comprising a channel (4) for conveying the sewage, and a net (8) for separating unwanted trash materials from the sewage in the channel, characterised in that the net is a folded elongate tubular net contained in a cassette (7), and a plurality of mechanically driven rollers (10) are provided, positioned above the channel for drawing the net out of the cassette for raising it from a filtering position in the channel, at which the net is arranged for submersion in sewage in the channel, up to a draining position above the channel, and for dewatering the net and its associated trash by pressure between the rollers.

2. A device according to claim 1 further comprising means for sensing when the net is filled to a desired degree, said means being arranged to operate the mechanically-driven rollers.

3. A device according to claim 2 wherein the means for sensing comprise a pressure gauge/pressostat placed near the inlet to the net.

4. A device according to any one of claims 1 to 3, further comprising a pipe (5) in the inlet to the net, said pipe acting as a support for the cassette (7) and serving to lead sewage into the net (8) in a horizontal, submerged position thereof, and a hinged joint (6) in the pipe (5) allowing the cassette to be lifted above the sewage level for replacement.

5. A method of pre-treatment of sewage comprising guiding the sewage along a channel in which is located a net for separating unwanted trash materials from the sewage, characterised in that the net is a folded elongate tubular net contained in a cassette and in that the net is drawn out of the cassette through a friction sleeve and drawn from a filtering position at which the net is submerged in sewage in the channel, up to a draining position above the level of the sewage, by mechanically driven rollers, whereby in being drawn through the rollers, the tubular net and its associated trash are dewatered by the pressure between the rollers.

## Patentansprüche

1. Vorrichtung zur Vorbehandlung von Abwasser mit einem Kanal (4) zur Führung des Abwassers und einem Netz (8) zur Trennung von groben Materialien aus den Abwasser im Kanal, dadurch gekennzeichnet, daß das Netz ein in einer Kassette (7) enthaltenes gefaltetes, langgestrecktes rohrförmiges Netz ist und daß eine Vielzahl von mechanisch angetriebenen Rollen (10) vorgesehen ist, die oberhalb des Kanals angeordnet sind, um das Netz aus der Kassette herauszuziehen, wodurch es von einer Filterstellung im Kanal, in der es in das Abwasser im Kanal eingetaucht ist, in eine Ablaufstelle oberhalb des Kanals angehoben wird, wobei das Netz und die groben Materialien durch Druck zwischen den Rollen entwässert werden.

2. Vorrichtung nach Anspruch 1 mit Mitteln zur Feststellung der Auffüllung des Netzes bis zu einem gewünschten Grad, welche die mechanisch angetriebenen Rollen betätigen.

3. Vorrichtung nach Anspruch 2, bei der die Feststellungsmittel als Druckmesser ausgebildet sind, der im Bereich des Einlasses zum Netz angeordnet ist.

4. Vorrichtung nach den Ansprüchen 1 bis 3 mit einem Rohr (5) im Einlaß zum Netz, das als Halterung für die Kassette (7) wirkt und zur Führung von Abwasser in das Netz (8) in dessen horizontaler eingetauchter Stellung dient, und mit einem klappbaren Gelenkstück (6) im Rohr (5), das die Anhebung der Kassette über den Abwasserspiegel zu deren Ersatz ermöglicht.

5. Verfahren zur Vorbehandlung von Abwasser, bei dem das Abwasser in einem Kanal geführt wird, in dem ein Netz zur Abtrennung unerwünschter grober Materialien aus dem Abwasser angeordnet ist, dadurch gekennzeichnet, daß das Netz ein in einer Kassette enthaltenes gefaltetes, langgestrecktes rundes Netz ist und daß das Netz durch eine Reibungshülse aus der Kassette herausgezogen wird und aus einer Filterstellung, in der es in das Abwasser im Kanal eingetaucht ist, in eine Ablaufstelle oberhalb des Abwasserspiegels durch mechanisch angetriebene Rollen gezogen wird, wobei das runde Netz und die groben Materialien beim Durchziehen durch die Rollen durch den Druck zwischen den Rollen entwässert werden.

**Revendications**

1. Dispositif pour le prétraitement des eaux d'égout, comprenant un conduit (4) servant à véhiculer les eaux d'égout, et un filet (8) servant à séparer les matériaux en forme de détritus indésirables des eaux d'égout, dans le conduit, caractérisé en ce que le filet est un filet tubulaire allongé replié, logé dans un caisson (7), et il est prévu une pluralité de rouleaux (10) entraînés mécaniquement, disposés au-dessus du conduit pour retirer le filet hors du caisson afin de le soulever à partir d'une position de filtration dans le conduit, dans lequel le filet est disposé de manière à être immergé dans les eaux d'égout, situées dans ce conduit, jusque dans une position d'évacuation au-dessus du conduit, et pout exprimer l'eau hors du filet et des détritus, qui lui sont associés, sous l'action d'une pression entre les rouleaux.

2. Dispositif selon la revendication 1, caractérisé en ce qu'il comprend en outre des moyens pour détecter le moment où le filet est rempli à un degré désiré, lesdits moyens étant agencés de manière à actionner les rouleaux entraînés mécaniquement.

3. Dispositif selon la revendication 2, dans lequel les moyens de détection comprennant un pressostat placé à proximité de l'entrée dans le filet.

4. Dispositif selon l'une quelconque des revendications 1 à 3, comportant en outre une canalisation (5) située dans l'entrée du filet, ladite canalisation agissant en tant que support pour le caisson (7) et servant à charger les eaux d'égout dans le filet (8) lorsque ce dernier est dans une position horizontale immergée, et un joint articulé (6) placé dans la canalisation (5) et permettant de soulever le caisson au-dessous du niveau des eaxu d'égout, pour son remplacement.

5. Procédé de prétraitement des eaux d'égout, consistant à guider les eaux d'égout dans un conduit dans lequel lequel se trouve disposé un filet servant à séparer les substances en forme de détritus indésirables, des eaux d'égout, caractérisé en ce que le filet est un filet tubulaire allongé replié logé dans un caisson et est ressorti du caisson au moyen d'un manchon à frottement et est tiré à partir d'une position de filtrage, dans laquelle il est immergé dans les eaux d'égout à l'intérieur du conduit, jusque dans une position d'évacuation au-dessus du niveau des eaux d'égout, au moyen de rouleaux entraînés mécaniquement, ce qui a pour effet que lors du tirage du filet tubulaire, au moyen des rouleaux, l'eau est exprimée du filet et des détritus, qui y sont associés, par la pression présente entre les rouleaux.

FIGUR 1

FIGUR 2

EP 0 183 767 B1